# EUROPEAN PATENT APPLICATION

(11) **EP 3 396 565 A1**
(43) Date of publication of application: **31.10.2018**
(21) Application number: 17168813.8
(22) Date of filing: 28.04.2017
(51) Int. Cl.: G06F 17/30

(54) **METHOD FOR SUPPORTING THE PROVIDING OF A CONVERSATIONAL SERVICE, A RELATED CONVERSATION SUPPORTING DEVICE AND A RELATED SYSTEM**

(71) Applicant: Nokia Technologies Oy, 02610 Espoo (FI)
(72) Inventor: HUYSEGEMS, Rafaël, 2018 Antwerpen (BE); THEETEN, Bart, 2018 Antwerpen (BE); JANSSENS, Nico, 2018 Antwerpen (BE)
(74) Representative: Nokia Bell Patent Attorneys

(57) **Abstract**

The present invention relates to a_Conversation Supporting Device for use in a system for supporting a conversational service by a conversational device of a plurality of conversational devices to a user device at request of said user device where the user device is being coupled to each conversational device of the plurality of conversational devices over a communications network wherein the Conversation Supporting Device comprises a reception means being coupled to said communications network configured to receive a question of said conversational device directed to said user device, an analysis means that is configured to analyze the question of the conversational device for determining a question type and a topic associated with said question and an Association determining Means that is configured to determine/retrieve an associated response to the question (type and said topic) from an association device based on said question type and said topic being maintained together with said response at said association device.

## Description

### FIELD OF THE INVENTION

The present invention relates to the field of conversational applications and platforms, and in particular to improving the interaction between conversational applications and participants in a conversational session.

### TECHNICAL BACKGROUND OF THE INVENTION.

Chat is at this moment a well-established form of communication. Currently, there are deployments of chat-bots to support users in perform a certain task (e.g. helpdesk-bots) or to offer commercial services (taxi-bots, pizza-bots, etc.). These chat-bots are often deployed as an extension to an existing web-service. An advantage of such chat-bots further referred to as conversational devices, is that they enable users to communicate with the system for providing such service using natural language.

It is however disadvantageous that such a conversational device confronts a user with a lot of questions on personality of the user persona (name, age, email-address, physical address, etc.) on preferences of the user and other data related to such user where such questions may be very repetitive as those similar questions are asked often by each of bot the user interacts with.

### SUMMARY OF THE INVENTION

An objective of the present invention is to provide with a method, a system and related device for supporting the providing of a conversational service, but wherein the aforementioned shortcoming or drawbacks of the known solutions are alleviated or overcome.

Accordingly, embodiments of the present invention relate to a Conversation supporting device for use in a system for supporting the providing of a conversational service by a conversational device of a plurality of conversational devices to a user device at request of said user device (UD), said user device being coupled to each conversational device of said plurality of conversational devices over a communications network, wherein said Conversation supporting device comprises a reception means, being coupled to said communications network that is configured to receive a question of said conversational device directed to said user device, an analysis means, that is configured to analyze said question of said conversational device for determining a question type and a topic associated with said question; and an Association determining Means, configured to determine an associated response to said question from an association device, based on said question type and said topic being maintained together with said response at said association device.

Another embodiment of the present invention relates to a conversation supporting device wherein said Conversation supporting device further comprises an Association inferring Means that is configured to infer a new association, for adding to said associated device by inferring a new response to a certain question type and corresponding topic where said new response is based on a preference of a user of said user device.

Still another embodiment of the present invention relates to a conversation supporting device, wherein said Conversation supporting device further comprises an Association validation Means being configured to validate a new association inferred by said association inferring means AIM, based on a sentiment analysis.

A further embodiment of the present invention relates to a conversation supporting device further comprising an utterance formulating means configured to forward said response associated with said question type and said topic from said association database to said conversational device for providing said a service to said user device based on said response.

Another embodiment of the present invention relates to a system for supporting the providing of a conversational service by a conversational device of a plurality of conversational devices to a user device at request of said user device, said user device being coupled to each conversational device of said plurality of conversational devices over a communications network, wherein said system further comprises a Conversation supporting device.

Still another embodiment of the present invention relates to a method for supporting the providing of a conversational service, by a conversational device of a plurality of conversational devices to a user device at request of said user device , wherein said method comprises the steps of receiving question of said conversational device directed to said user device, analyzing said question of said conversational device for determining a question type and a topic associated with said question, determining an associated response to said question (type and said topic) from an association device , based on said question type and said topic being maintained together with said response at said association device.

Another embodiment of the present invention relates to a method for supporting the providing of a conversational service wherein said method further comprises the step of forwarding said response associated with said question type and said topic from said association database to the conversational device for providing said a service to said user device based on said response.

Still another embodiment of the present invention relates to a method further comprising the step of associating a new response to a certain question type and topic where said new response is based on a preference of a user of said user device.

Still another embodiment of the present invention relates to a method further comprising the step of detecting preferences of a user of said user device.

In this way by first receiving a written or spoken question of a conversational device, which question is directed to a certain user device and which conversational device is configured to provide a service at request, i.e. upon receipt of said question, to the meant user device, succeeded by analyzing said question of said conversational device for determining a question type and a corresponding topic that is associated with the question and subsequently determining an associated response to said question (type and said topic) from an association device, based on said question type and said topic determined.

Receiving such question may be implemented or executed by means of intercepting the question or alternatively by means of receiving such question in case of a proxy.

Subsequently this response associated with said question type and said topic may be forwarded from said association database to said conversational device for enabling the providing of said a service to said user device based on said response where this response being an answer to said question.

The step of analyzing said question of said conversational device for determining a question type and a topic associated with said question may be performed by means of Natural Language Processing (NLP), face recognition, speech recognition, search, etc. This technique can easily be applied by service providers to create and deploy a conversational device such as a chat-bot.

Based on the analysis, optionally being executed by means of natural language processing the question is decomposed into a question type and a corresponding topic of the to be analysed question.

Further, the determining of an associated response to said question type and said topic is performed by looking up an entry in a table of the association device where each entry of such table may contain a question type and corresponding topic together with an appropriate response to the question. The determined question type and corresponding topic being maintained together with said response in an entry of a table at the association device.

Subsequently, at determination of the associated response, i.e. the response that is associated with the question type and said topic may be forwarded from the association device towards said conversational device for enabling the conversational device to provide said a service to said user device based on said response where the response being an answer to said question.

According to another preferred embodiment, an Association inferring Means is configured to infer a new association, i.e. to add a new entry including a question type, a corresponding topic with a newly inferred response to said association device, by inferring a new response to a certain combination of question type and corresponding topic where said new response is based on a preference of a user of said user device.

In case a question type and corresponding topic is not present at said association device, i.e. there is no entry in the table maintained by the association device comprising the meant question type and corresponding topic, a new entry is to be inferred where such entry comprises the meant question type with the corresponding topic completed with a newly inferred response, which response may be based on at least one preference of a the user.

Such newly inferred response may be obtained by listening to the communication between the user of a certain user device and other users with respective user devices and/or conversational devices. Based on these messages exchanged in such communication, a number of preferences (i.e. likes or dislikes) expressed or confirmed by the user are detected. Detected preferences may be stored in a preferences-database.

The Association inferring means is invoked when the question-type and corresponding topic are not known. In case, a question-type with corresponding topic is not known it is attempted to generate an association between the question-type and the corresponding topic and one or more of the already learned preferences to provide an answer to the question.

In other words the association inferring means attempts to match the topic with at least one of the preferences of the meant user. Next, the association inferring means applies an algorithm to find the best matching preference(s).

At selection of a preference as a response to the question type with corresponding topic, the association comprising the question type with corresponding topic and matched preference as a response is added to the list of associations, i.e. stored as an entry at the association device. The discovered association(s) between question-type and corresponding topic pair (e.g. ask-favorite/drink) and the answer(s) (e.g. cola, tea) could be stored in the association database in case the confidence in the inferred answer is sufficiently high.

According to another preferred embodiment, an association validation means is configured to validate a new association or existing association that is inferred by said association inferring means AIM, based on a sentiment analysis.

To validate an association maintained by said association device or to validate a newly inferred association, the association validating means for each such association, applies a sentiment analysis to evaluate the reply from the conversation supporting device forwarded from said association device to the conversational device.

The association validation means may be triggered by a response provided by the association-inferring means of the conversation supporting device.

Based on the result of the sentiment analysis executed by the association validation means, the association validation means may either approve (i.e. a positive sentiment) or invalidate (i.e. a negative sentiment) the inferred association and update the association device accordingly.

Such Negative sentiment may be caused by e.g. the reaction of the conversation device on the answer from the system or for instance by the reaction from the user.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for the supporting of conversational services according to an embodiment of the present invention; and
Fig. 2 represents the functional structure of a conversation supporting device CSD according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

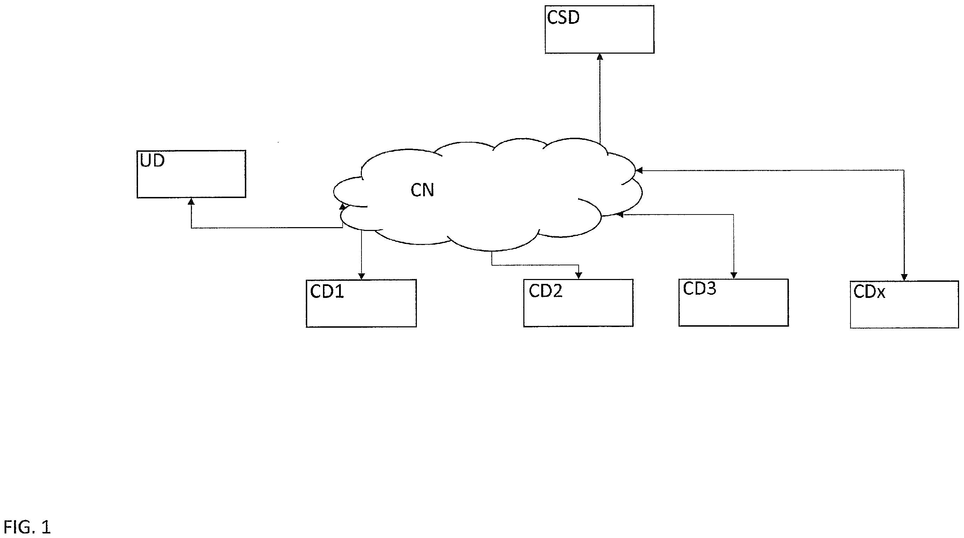

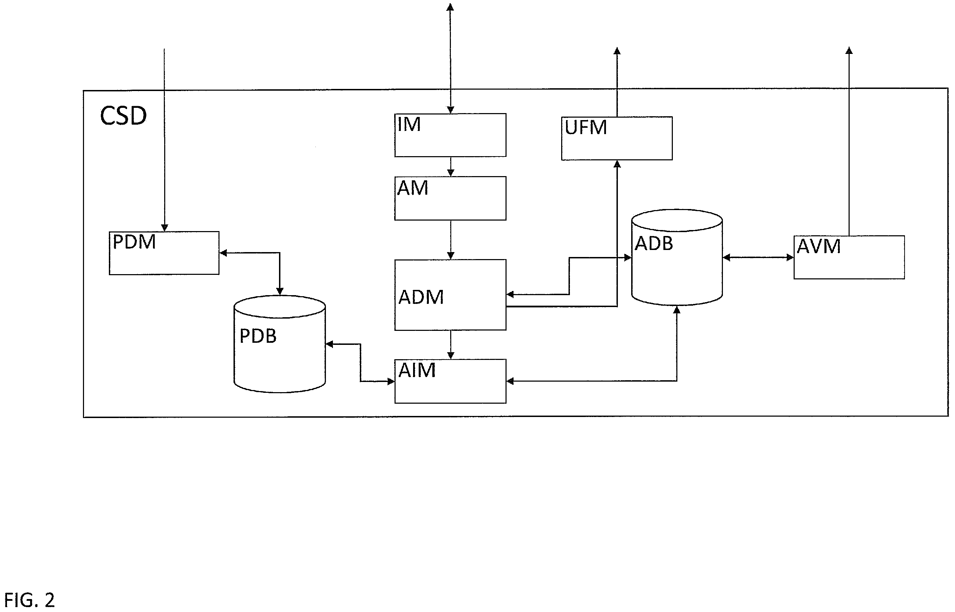

In the following paragraphs, referring to the drawing in FIG.1, an implementation of the system for the supporting of conversational services according to an embodiment of the present invention is described. In a further paragraph, all connections between mentioned elements are defined. Subsequently all relevant functional means of the mentioned conversation supporting device as presented in FIG.2 are described followed by a description of all interconnections.
In the succeeding paragraph the actual execution of the system is described.

A first essential element of the system is a user device UD of a respective user for requesting a service at a conversational device CD1. Such user device UD may be a personal computer like a desktop or laptop computer, a tablet PC a mobile phone like a smart phone or alternatively be any device that is adapted to handle text messages, any devices that is intended to listen in on conversation (voice) and that can be used to answer questions. (e.g. the Alexis Echo system).

Furthermore, the system comprises at least one conversational device CD1, CD2, CD3,.., CDx that is configured to provide a service at request of a user where such request may be provided by means of the conversational device. Such conversational device may be a device that supports users in performing a certain task e.g. communicating with a helpdesk or a service for offering commercial services (like ordering a taxi o r a pizza where such conversational device may be devised by means of a chat-bots that help users to perform a certain task.

Such chat-bots are often deployed as an extension to an existing web-service. Such conversational device like a chat-bots enable users to communicate with the system using natural language.

Finally, there is a conversation supporting device CSD is configured to support the providing of a conversational service by a conversational device CD1 of a plurality of conversational devices CD1,..., CDx to a user device UD at request of said user device UD.

This conversation supporting device CSD being a device that is under control of a user and is intended to represent this user towards the at least one conversational device. Such conversation supporting device CSD supports the operation of the at least one conversational device in that the conversation supporting device CSD is configured to interact with the at least one conversational device, like a (third-party) bot, on behalf of this user. The intention of the conversational support device CSD is to avoid overly verbose interactions between the users and the at least one conversational device.

Such conversational supporting device CSD is configured to respond to trivial questions from conversational devices like bots regarding the user's persona such as name, age, email-address, physical address, etc.

The conversation supporting device CSD but is also configured to learn, infer and answer complex questions regarding preferences and habits of the user. In this way, the conversational supporting device CSD saves user-time and eliminates user-frustration related to repetitive inputs. An advantage of the conversation supporting device CSD is that it is "owned" and "private" to the user, so less privacy-sensitive information needs to be stored by other services or third-party bots. Moreover, such conversation supporting device CSD is configured to oversee all communication across all conversational devices CD1, CD2, CD3,...,CDx and can therefore learn better than the profiling in silo's that is done by conversational devices.

The user device UD is coupled to each of the conversational devices over a communications network CN that may include a Digital Subscriber Line access network or a cable network or any other suitable access network, a core internet network and a further access network on the side of the multimedia exchange server. Alternatively, the user device may be coupled to each of the conversational devices CD1, CD2, CD3,..., CDx over any mobile or fixed connections such as Wi-Fi, Bluetooth, LTE, GPON, FTTH, FTTP, etc.

Furthermore, the conversation supporting device CSD may be coupled to each of the conversational devices over a communications network CN that may include a Digital Subscriber Line access network or a cable network or any other suitable access network, a core internet network and a further access network on the side of the multimedia exchange server. Alternatively, the conversation supporting device CSD may be coupled to each of the conversational devices CD1, CD2, CD3,..., CDx over any mobile or fixed connections such as Wi-Fi, Bluetooth, LTE, GPON, FTTH, FTTP, etc.

Furthermore, the system may comprise an association device ADB, which device may be implemented as a database for storing the associations, where each association comprises a question type with corresponding topic and the associated response. The association device ADB may be incorporated in the conversation supporting device but may be also be incorporated in a remote device or be distributed over one or more remote devices.

The conversation supporting device CSD first comprises a reception means IM being coupled to said communications network CN and being configured to receive a written or spoken question of said conversational device CD1 which question is directed to said user device UD, which reception means may be implemented by means of a reception function of a chat-platform where the reception can be implemented as a platform-function in the chat-platform proxy function/bot that receives and sends messages on behalf of the user. Only this proxy function/bot is able to directly communicate with the user. The analysis means AM is configured to analyse a question of said conversational device CD1 for determining a question type and a topic associated with the received question. The analysis means AM may analyse the question of said conversational device CD1 by means of natural language processing such as by means of Natural Language Understanding (NLU) where the received utterance is converted to an intent and n number of entities or for instance.

An alternative and simpler method could be to apply "slot filling" techniques in orderto obtain a question type and a corresponding topic. The Slot filling is also called regular expressions, see https://en.wikipedia.org/wiki/Regular expression e.g. "I love Italian food" matches with pattern "I love (*) "where the retrieved parameter would be "Italian food"

Further, the conversation supporting device CSD may comprise an association determining Means ADM that is configured to determine an associated response to the question type and corresponding topic from an association device ADB, based on said question type and the corresponding topic being maintained together with said response at said association device ADB.

The conversation supporting device CSD may additionally comprise an Association inferring Means AIM that is configured to infer new associations, for adding to said association device ADB, by inferring a new response to a certain question type and topic where said new response maybe based on a preference of a user of said user device UD in case that the associated response to a question (i.e. to a question type and corresponding topic) is not present at said association device ADB.

Further, the conversation supporting device CSD may further comprise an Association validation Means AVM that is configured to validate a new association inferred by said association inferring means AIM, where the validation is based on a sentiment analysis.

The Conversation supporting device CSD additionally comprises a utterance formulation means UFM that is configured to forward said response associated with said question type and said topic from said association database ADB to said conversational device CD1 for providing said service to said user device UD based on said response where the response is an answer to the question. Such utterance formulation means may be implemented by means of an utterance formulations means that is configured to formulate an answer in natural language based on the information received from the Association determination means or from the association inferring means AIM. This answer may be a text-based message such as chat but may alternatively be a speech message by applying speech-to-text and text-to-speech components.

Furthermore, the conversation supporting device CSD further comprises a preference detection means PDM that receives utterances of a user where such utterances may include preferences of the user such as "I drink a lot of cola" The preferences detection means PDM subsequently analyses the utterance like "I drink a lot of cola" by means of a natural language processing function, which analysis may result in an intent (like/dislike/none) and a preference-entity (e.g. cola). This preference entity (cola) together with an intent (like) are stored in the preference database PDB that is configured to store all kinds of preferences together with an intent for each user known to the system.

The reception means IM has an input-terminal that is at the same time an input-terminal of the conversation supporting device CSD and further is coupled with an output to an input of the analysis means AM that in turn is coupled with an output to an input of the Association determining Means ADM. The Association determining Means ADM further is coupled with an output to an input of the Association inferring Means AIM. Moreover, the association determining means ADM is coupled to the association device ADB. The Association inferring Means AIM additionally is coupled to the association device ADB.

The utterance formulation means UFM of the conversation supporting device further is coupled with an input to an output of the association determination means ADM. The utterance formulation means further is coupled with an output to an output-terminal of the conversation supporting device CDS.

The Association validation Means AVM has an input-terminal that is at the same time an input-terminal of the conversation supporting device CSD and further is coupled to the association device ADB. The association device furthermore is coupled to the association device AD.

The preferences detection means PDM of the conversation supporting device CSD first is coupled with an input that is at the same time an input-terminal of the conversation supporting device CSD. The preferences detection means PDM further is coupled to the preference database PDB

Each user device UD may be coupled to conversation supporting Device CSD over a communications network able to support remote video communication sessions where such communications network may include an xDSL, xPON, WMAN, LAN, 3G link or other fixed or mobile connection such as Wi-Fi, Bluetooth, GSM, UMTS 4G etc. or any combination of the previous communication networks.

It is to be noted that each of the at least one conversational device CSD has the same functional structure and couplings as the first conversational device CD1.

In order to explain the present invention first it is assumed that a user who intends to request a certain kind of service, e.g. would like to order a taxi, order a pizza at a delivery service or book plain tickets or hotel bookings etc. in a first step requests a service at a first conversational device CD1 that is adapted to intermediate between a user and a service delivery party, like for instance a kind of service bot. In order to execute the requested service, the conversational device being a Personal computer, a smartphone tablet or TV using an application such as Facebook messenger, Slack, WhatsApp, Snapchat, Telegram, the conversational device, e.g. the service bot needs to obtain certain information on the user in order to optimum provide the service the users wishes.

At first, the user receives a question from the conversational device CD1, i.e. a third-party service-bot, where the question for instance reads on ("What would you like to drink?") which question is intercepted by the conversation supporting device CSD. Subsequently, the intercepted question is analysed by means of the analysis means AM that is configured to analyse said question of said conversational device CD1 for determining a question type and a topic associated with said question. The question is analysed by a natural language processing function, an NLP function of the Association analysis means AM, resulting in this specific situation in a question-type (like for instance :. ask-favorite) and a topic (e.g. "drink").

Based on the determined question type, a question-type, like for instance: ask-favourite) and a topic (e.g. "drink"), the Association determining Means ADM, determines an associated response to the question of the conversational device CD1, which is performed based on the question type with corresponding topic from the association device ADB, where the question type and the corresponding topic being maintained together with the response at the association device ADB. In other words, the Association determining Means ADM requests the association device ADB to look for a data record while as an entry to the data record the question type and corresponding topic couple of " ask favorite - drink" are applied. The association database ADB in turn attempts to find a data-record in the database containing "ask favorite - drink" as an entry. In case the association database ADB finds such an entry in the database it retrieves the associated further data field of the data-record that is related to the associated response to the meant question (i.e. question-type and corresponding topic). Subsequently at retrieval of the response field from the data-record being "coca cola", this response is forwarded by means of the utterance formulation means UFM that forwards the response that is associated with said question type and said topic from said association database ADB to the conversational device CD1 for providing said a service to said user device UD based on said response where the response is an answer to the question. Such utterance formulation means UFM may be implemented by means of an utterance formulations being means that is configured to formulate an answer in natural language based on the information received from the Association determination means or from the association inferring means AIM. Hence the utterance formulation means answers to the conversational device CD1 "coca cola" by means of text.

Alternatively, the utterance formulation means may forward such answer by means of speech. Based on the response "coca cola" the conversational device can ask a further question or in case the device possess sufficient information for proceeding with the service delivery, act correspondingly in providing the service.

Furthermore, the conversation supporting device CSD further comprises a preference detection means PDM that may intercept utterances of a user where such utterances may include preferences of the user such as "I drink a lot of cola". Such preference may alternatively also be retrieved from other than written electronic messages such as speech.

The preferences detection means PDM subsequently analyses the utterance like "I drink a lot of cola" by means of a natural language processing function, which analysis may result in an intent (like/dislike/none) and a preference-entity (e.g. cola). This preference entity (cola) together with an intent (like) are stored in the preference database PDB that is configured to store all kinds of preferences together with an intent for each user known to the system. The association determination means ADM verifies whether a combination is already existing in the association database ADB. In case the association is not present, the Association Inferring means AIM first retrieves the already learned preferences of the respective user from the preference database PDB. The Association Inferring means AIM subsequently tries to match the question type "ask - favorite" and topic ("drink") with at least one of the preferences (e.g. cola, pizza, BMW, running, ...). The Association Inferring means AIM then applies an algorithm to find at least one best matching preference. The Association Inferring may be performed by means of word-vectoring. A word-vectoring system may perform this association inferring according to a well-known technique in literature wherein the similarity of 2 words is expressed as a distance in an n-dimensional vector space. Each word is mapped to a vector in this space. The best matching preference, e.g. coca cola is applied for future use. The discovered association(s) between question-type/topic pair (e.g. ask-favorite/drink) and the answer(s) (e.g. cola, tea) could be stored in the association database ADB. The at least one, in case there are more possible discovered associations (i.e. responses is passed to the utterance formulation means UFM being an utterance formulation tool. The utterance formulation means UFM being an utterance formulation tool will respond to the requesting conversational device CD1 in natural language (e.g. "I prefer coca cola")Moreover to validate whether a discovered association is appropriate and correct, the association validating means AVM is triggered at forwarding a response from the association-inferring means AIM towards the conversational device CD1.The Association validation means AVM applies a sentiment analysis to evaluate the forwarded response from the association-inferring means AIM towards the conversational device CD1. Depending on the result of the sentiment analysis, the Association validator can either approve (positive sentiment) or invalidate (negative sentiment) the inferred association and update the corresponding data record that belongs to the association at the association-device ADB accordingly.

Such Negative sentiment may be caused by:
- The reaction of the third-party service-bot on the answer from the system. ("I do not understand your answer.")
- The reaction from the user. ("no cola, I would like to order an ice tea.")

The various functional means of the system may be located in a central manner in a single device but alternatively may be distributed over various local or remote devices.

The association validation means may be triggered by a response provided by the association-inferring means of the conversation supporting device.

Based on the result of the sentiment analysis executed by the association validation means, the association validation means may either approve (i.e. a positive sentiment) or invalidate (i.e. a negative sentiment) the inferred association and update the association device accordingly.

Such Negative sentiment may be caused by e.g. the reaction of the third-party service-bot on the answer from the system. ("I do not understand your answer.") or for instance by the reaction from the user. ("no cola, I would like to order an ice tea.")

In such a conversational system comprising a conversational platform such conversational platform comprising at least one chat bot further referred to as bot. Such chat bots comprising an interface using natural language for interacting with a user.

It is to be noted that although in the above described embodiment of the invention wherein the reception of a question is implemented by means of intercepting such question, it may be an alternative implementation of the present invention where the such question is received in case of a proxy between a user device and a conversational device. CSD can also be positioned between the UD1 and one or more CD's.

The Conversation Supporting Device alternatively may perform the function of a proxy/augmenter, having at least 2 p2p connections: one with a User Device and another with the Conversational Device. In this case the Conversation Supporting Device plays the role of a proxy, there is no interception required.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Conversation supporting device (CSD) for use in a system for supporting the providing of a conversational service by a conversational device (CD1) of a plurality of conversational devices (CD1,..., CDx) to a user device (UD1) at request of said user device (UD), said user device (UD) being coupled to each conversational device (CD1) of said plurality of conversational devices (CD1,...,CDx) over a communications network (CN), wherein said Conversation supporting device (CSD) comprises:
- An reception means (IM), being coupled to said communications network (CN) configured to receive a question of said conversational device (CD1) directed to said user device (UD); and
- An analysis means (AM), configured to analyze said question of said conversational device (CD1) for determining a question type and a topic associated with said question; and
- Association determining Means (ADM), configured to determine an associated response to said question (type and said topic) from an association device (ADB), based on said question type and said topic being maintained together with said response by said association device.

2. Conversation supporting device (CSD) according to claim 1, wherein said Conversation supporting device (CSD) further comprises:
- An Association inferring Means (AIM), configured to infer a new association, for adding to said associated device ADB, by inferring a new response to a certain question type and corresponding topic where said new response is based on a preference of a user of said user device.

3. Conversation supporting device (CSD) according to claim 2, wherein said Conversation supporting device (CSD) further comprises:
- An Association validation Means (AVM), configured to validate a new association inferred by said association inferring means (AIM), based on a sentiment analysis.

4. Conversation supporting device (CSD) according to claim 1 or 2, wherein said Conversation supporting device (CSD) further comprises:
- A utterance formulation means configured to forward said response associated with said question type and said topic from said association database (AD) to said conversational device (CD1) for providing said a service to said user device (UD) based on said response.

5. A system for supporting the providing of a conversational service by a conversational device (CD1) of a plurality of conversational devices (CD1,..., CDx) to a user device (UD) at request of said user device (UD), said user device (UD) being coupled to each conversational device (CD1) of said plurality of conversational devices (CD1,..., CDx) over a communications network (CN), wherein said system further comprises: a Conversation supporting device (CSD) according any of claim 1 to 4.

6. A method for supporting the providing of a conversational service, by a conversational device (CD1) of a plurality of conversational devices (CD1,..., CDx) to a user device (UD) at request of said user device (UD), wherein said method comprises the steps of:
- a conversation support device (CSD) receiving a question of said conversational device (CD1) directed to said user device (UD); and
- analyzing said question of said conversational device (CD1) for determining a question type and a topic associated with said question; and
- said conversation support device (CSD) determining an associated response to said question type and said topic from an association device (ADB), based on said question type and said topic being maintained together with said response by said association device.

7. A method for supporting the providing of a conversational service, according to claim 3, wherein said method further comprises the step of:
- said conversation support device (CSD) forwarding said response associated with said question type and said topic from said association database (AD) to said conversational device (CD1) for providing said a service to said user device (UD) based on said response.

8. A method according to claim 6 or 7, wherein said method, further comprises the step of associating a new response to a certain question type and topic where said new response is based on a preference of a user of said user device.

9. A method according to claim 8, wherein said method further comprises the step of detecting preferences of a user of said user device (UD).
